# DEMANDE DE BREVET EUROPEEN

(11) **EP 1 525 800 A1**
(43) Date de publication de la demande: **27.04.2005**
(21) Numéro de dépôt: 04024831.2
(22) Date de dépôt: 19.10.2004
(51) Int. Cl.: A22C 11/00

(54) **Machine pour nouer une corde à la crosse d'un jambon**

(30) Priorité: 20.10.2003 IT PR20030094
(71) Demandeur: Gelmini, Antonio, 43013 Langhirano (Parma) (IT)
(72) Inventeur: Gelmini, Antonio, 43013 Langhirano (Parma) (IT)
(74) Mandataire: Guareschi, Antonella

(57) **Abrégé**

L'invention est liée au domaine des installations pour la préparation des jambons crus et se réfère en particulier à une machine pour nouer une corde à la crosse d'un jambon. La machine prévoit un convoyeur (7) sur lequel parviennent les jambons espacés selon une distance déterminée avec la crosse orientée vers le sens d'avancée du convoyeur. En fin dudit convoyeur (7) est prévu un groupe de tendage (10) de la corde (41) constitué d'une pince fixe (11) et d'une pince mobile (12). Entre les deux pinces est inséré un groupe de formation du noeud (13). Les pinces et le groupe de formation du noeud sont montés sur de respectifs arbres verticaux (80), (81) et (82) qui peuvent translater verticalement et dans le même temps pour se porter d'une position abaissée sous le plan de passage du jambon pendant la formation du noeud à une position soulevée à noeud formé pour l'introduction de la crosse dans le noeud lui-même de type en demi-clef.

## Description

L'objet de la présente invention est une machine pour nouer une corde à la crosse du jambon.

On connaît déjà une machine pour nouer et tendre une corde pour le liage de la crosse d'un jambon décrite dans le brevet IT 1.163.582.

La machine décrite dans le brevet cité ci-dessus résout le problème du nouage grâce à un noeud dit "en demi-clef" qui est le classique noeud employé pour pendre les jambons à des cadres spéciaux pendant toute la période de maturation.

Dans ladite machine, pour son principe de fonctionnement, le jambon doit être introduit et retiré manuellement sans aucune possibilité d'être chargé et déchargé automatiquement.

Pendant l'opération de nouage, l'opérateur doit rester sur place.

L'effort physique que l'opérateur doit accomplir, en considérant qu'un jambon pèse plus de 10 kg, est évident.

Le but de la présente invention est d'automatiser complètement l'opération de nouage de la crosse pour éviter la présence et l'effort physique d'un opérateur. Ce but ainsi que d'autres sont tous atteints par la machine à nouer une corde à la crosse d'un jambon, objet de la présente invention, qui se caractérise par ce qui est prévu dans les revendications jointes.

Les caractéristiques et avantages seront mis en évidence dans la description suivante de quelques formes de réalisation illustrées à pur titre d'exemple non limitatif dans les tables des dessins jointes, dans lesquelles:
- la figure 1 illustre la machine dans son ensemble dans une vue en perspective;
- la figure 2 illustre dans une vue en perspective le groupe de tendage de la corde et le groupe de formation du noeud en position d'insertion sur la crosse du jambon;
- la figure 3 illustre dans la même vue que la figure 2 le groupe de tendage et le groupe de formation en position au-dessous du plan de translation du jambon pendant la formation du noeud;
- la figure 4 illustre dans une vue frontale une pince fixe du groupe de tendage;
- la figure 5 illustre dans une vue de dessus la pince fixe de la figure 4;
- les figures 6 et 7 illustrent les deux vues latérales de la pince fixe du groupe de tendage;
- la figure 8 illustre une section longitudinale selon l'axe I-I de la figure 6;
- la figure 9 illustre la pince fixe dans une vue en perspective;
- la figure 10 illustre une pince mobile faisant partie du groupe de tendage dans une coupe longitudinale;
- la figure 11 illustre dans une vue en perspective le groupe de formation du noeud en position de début de cycle de formation du noeud;
- la figure 12 illustre le groupe de formation du noeud en position de noeud formé mais maintenu;
- la figure 13 illustre le groupe de formation du noeud en position de noeud formé en condition de relâchement;
- les figures 14 et 15 illustrent dans une vue en perspective un détail du support de roulettes du groupe de formation du noeud dans deux positions de travail;
- la figure 16 illustre dans une vue en perspective un mécanisme de tablettes portant les roulettes sur lesquelles est enroulée la corde pendant la formation du noeud et avec la corde tendue pendant la formation du noeud;
- les figures 17 et 18 illustrent dans deux vues en perspective, du haut et du bas, un mécanisme de mise en mouvement de deux bras manipulateurs du groupe de formation du noeud;
- la figure 19 illustre un bras manipulateur pendant la formation du noeud.

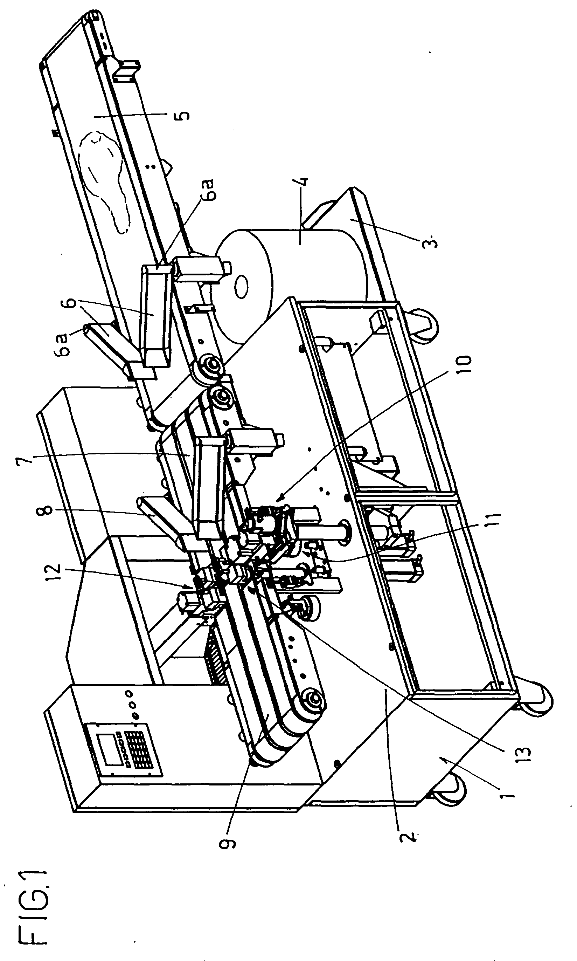

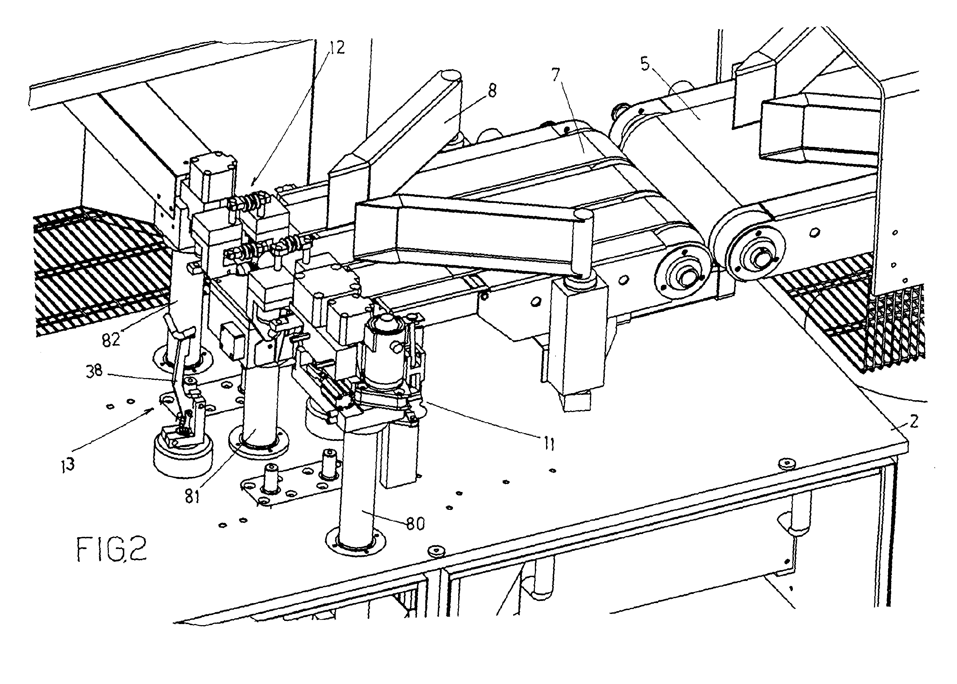

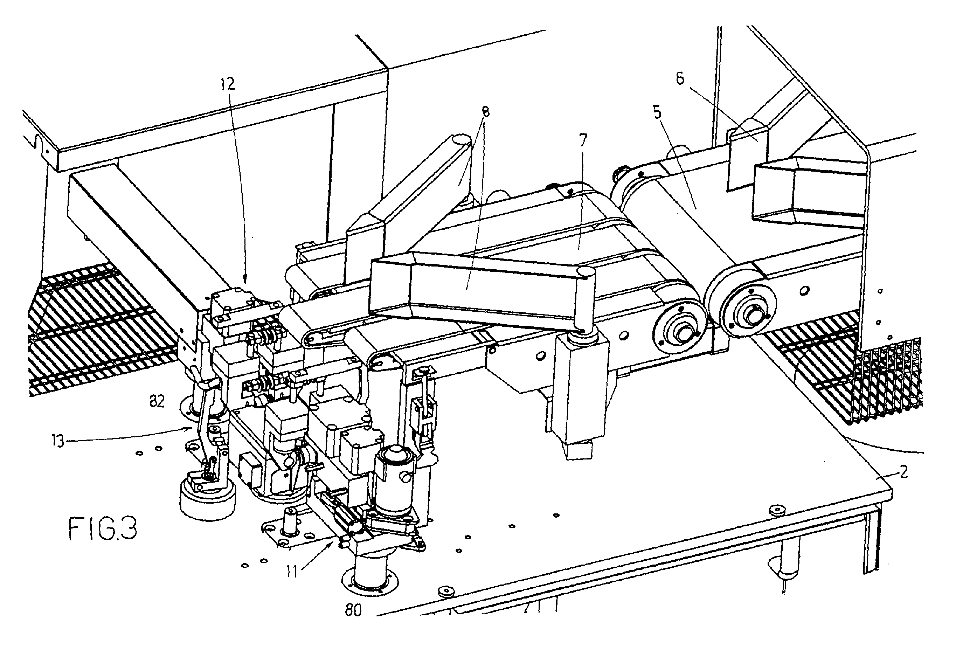

En référence aux figures 1, 2 et 3, 1 indique le châssis supportant toute la machine qui se compose d'un plan supérieur 2 et d'un plan inférieur 3 sur lequel repose une bobine de corde 4. 5 indique un premier convoyeur de jambons disposés sur le convoyeur avec la crosse orientée vers l'avant selon le sens du mouvement du convoyeur.

Les jambons sont maintenus par des parois d'arrêt 6 disposées au-dessus du convoyeur.

Les parois d'arrêt 6 sont supportées par des bras 6a qui peuvent pivoter pour les ouvrir et laisser passer à cadence prédéterminée les jambons disposés longitudinalement et avec la crosse en avant.

Successivement au premier convoyeur 5 est prévu un second convoyeur 7 sur lequel sont prévues des parois d'arrêt 8 analogues aux précédentes.

Espacé du second convoyeur, un troisième convoyeur 9 est prévu pour le déchargement des jambons auxquels a été appliquée la corde de suspension.

Transversalement à la machine, entre le second tapis convoyeur 7 et le troisième tapis convoyeur 9, est inséré un groupe de tendage 10 de la corde constitué par une pince fixe 11 et une pince mobile 12, ainsi qu'un groupe de formation du noeud indiqué dans son ensemble par 13.

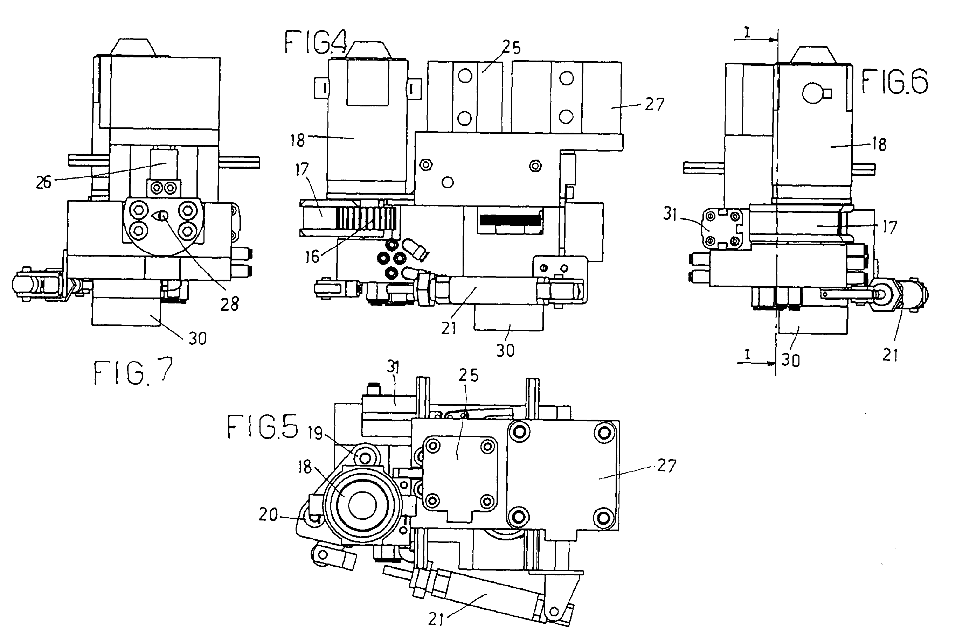

En référence aux figures 4 à 10 sera maintenant décrit le groupe de tendage de la corde provenant de la bobine 4, qui est insérée entre une roue dentée 16 et une courroie folle 17, la roue dentée 16 étant motorisée par l'intermédiaire d'un moteur 18.

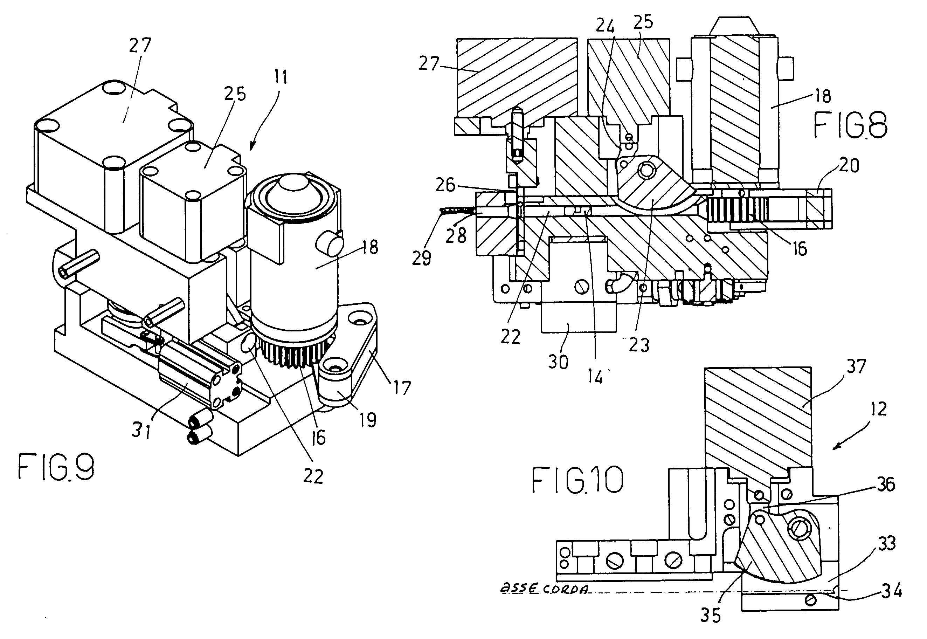

Avec 19 et 20 ont été indiqués deux rouleaux sur lesquels s'enroule la courroie qui peut osciller autour de l'axe du rouleau 20, de part la commande d'un piston pneumatique 21. Comme cela est mieux visible dans les figures 6 à 8, la pince fixe prévoit un canal 22 dans lequel s'insère un excentrique denté 23 qui peut interférer avec la corde.

Successivement, le long du canal, est prévue une roulette 14 actionnée par un actionneur 30 pour l'avancée de la corde dans le canal 22. 31 indique un piston de pression de la roulette d'alimentation 14 (figure 8) contre la corde.

L'excentrique denté 23 est porté à interférer avec la corde pour en effectuer le blocage par l'intermédiaire de la poussée d'une bielle 24 entablée excentrique par rapport au point de rotation de l'excentrique denté, la bielle étant commandée par un vérin pneumatique de blocage 25. 26 indique une lame à guillotine qui interfère avec le canal 22 et est commandée par un piston de coupe 27.

Après la lame est prévu un orifice de sortie 28 au travers duquel sort un morceau de corde 29 apte à être pincé par la pince mobile 12.

En référence à la figure 10, la pince mobile 12 prévoit un canal 33 pourvu d'une amorce 34, le long duquel peut interférer un excentrique denté 35 qui bloque le morceau de corde 29 par l'intermédiaire de l'actionnement d'une bielle 36 et d'un piston de blocage 37.

La pince mobile 12 est supportée par des guides de coulissement pour être translatée par la tige d'un vérin 12a.

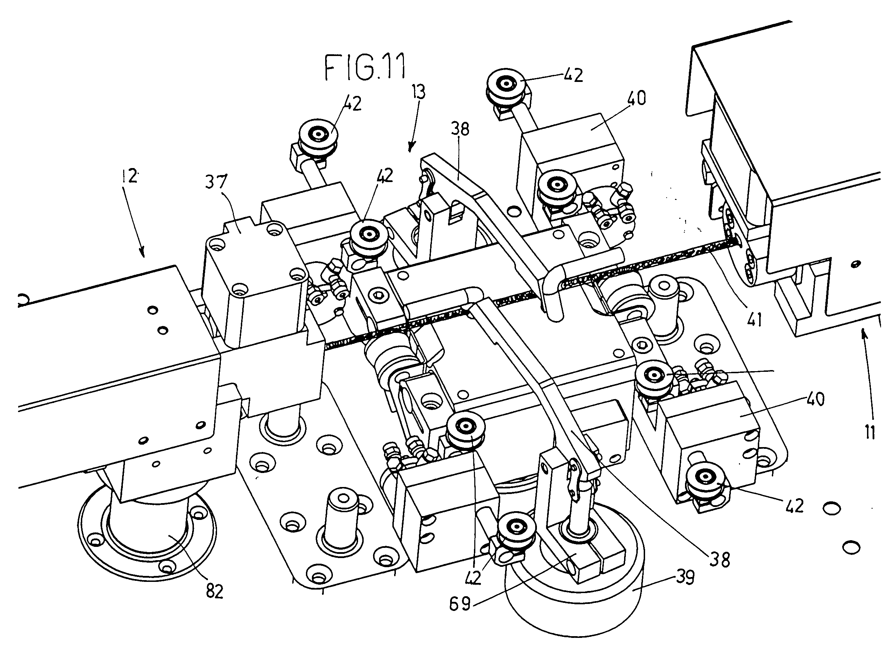

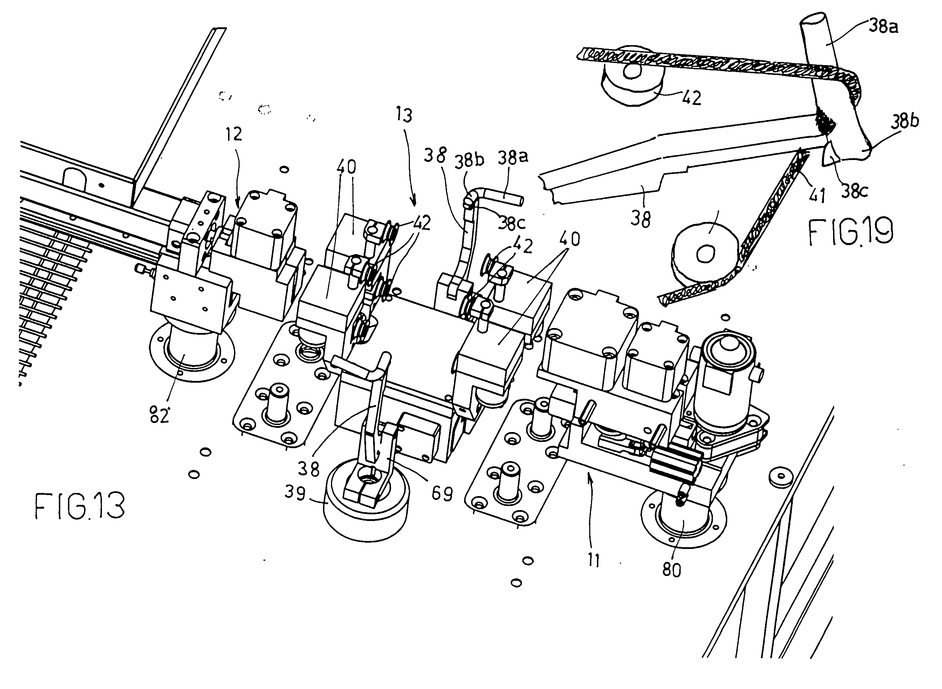

En référence aux figures 11, 12 et 13, l'on décrira le groupe de formation du noeud disposé entre la pince mobile et la pince fixe. Le groupe de formation du noeud comprend deux bras manipulateurs 38 soutenus par des tourelles 39 pivotant autour d'un axe vertical et disposées en face de quatre tablettes 40, chacune desquelles portant deux roulettes rainurées et folles 42.

Les tablettes 40 peuvent pivoter autour d'un axe horizontal perpendiculaire au sens d'avancée des tapis convoyeurs.

En position de début de cycle de formation du noeud, lesdites roulettes 42 reposent toutes sur un plan horizontal avec le propre axe de rotation verticale et peuvent se porter dans une position pivotée de 90° avec les axes de rotation parallèles au sens du mouvement des tapis convoyeurs et, successivement, peuvent se porter avec les axes parallèles à l'axe de tendage de la corde transversal audit tapis convoyeur, selon les séquences qui seront décrites ci-dessous.

Les bras manipulateurs 38 sont constitués de deux tiges 38a et 38b, dont la 38b a une forme de crochet pour saisir la corde et la porter à s'enrouler autour de toutes les quatre roulettes folles 42.

Dans l'angle d'union entre la tige 38a et la tige 38b, est prévue une dent 38c (figure 19) apte à engager la corde 41.

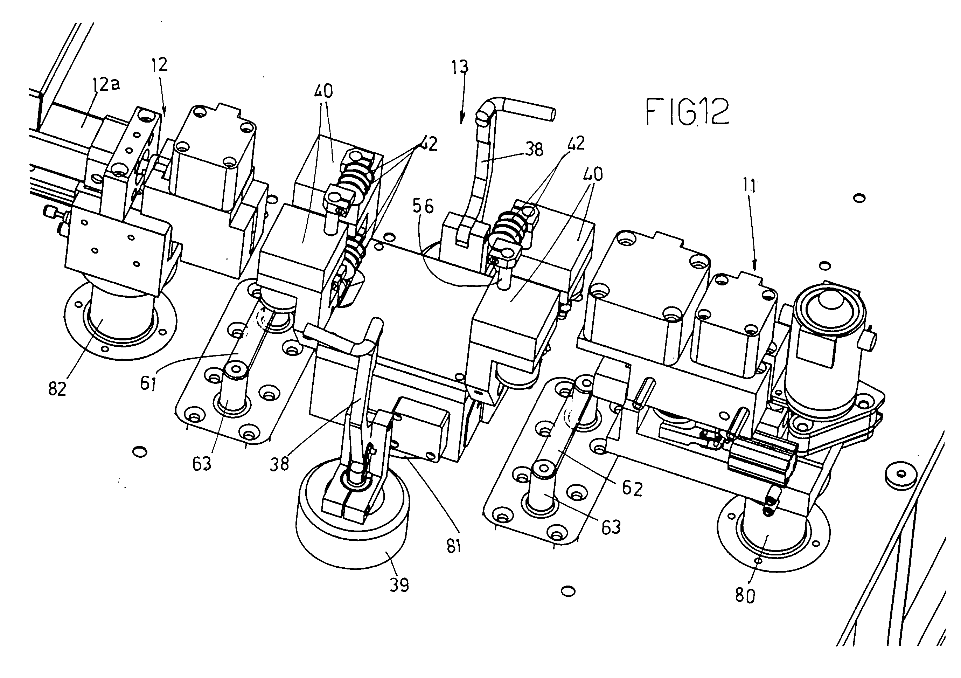

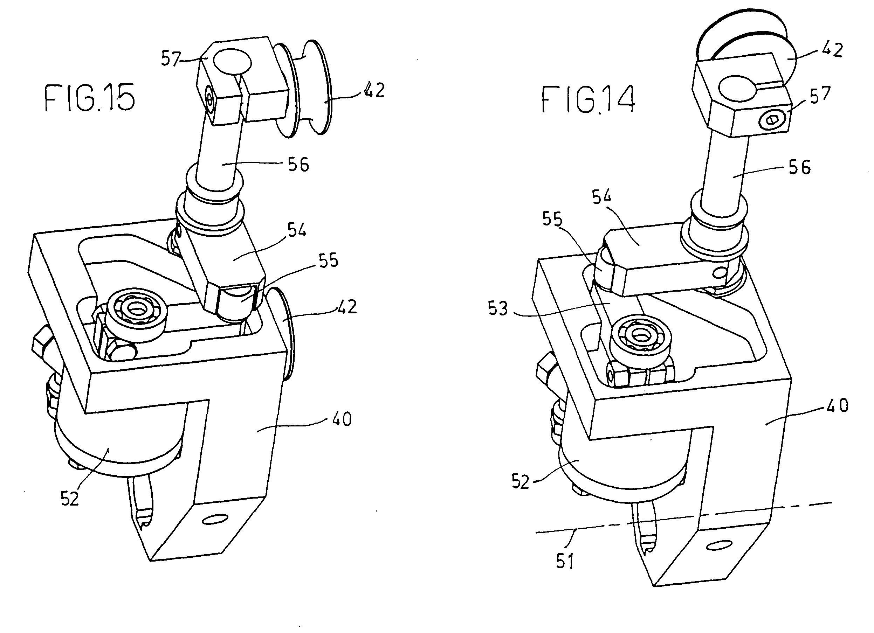

En référence aux figures 14 et 15, l'on note que les roulettes 42 pour assumer les positions décrites ci-dessus sont montées sur les tablettes de support 40 pivotant autour de l'axe 51 pour se porter de ladite position d'enroulement à la position de la figure 12 dans laquelle le noeud est formé et maintenu.

Pour se porter dans la position de relâchement du noeud, sur le support 50 est monté un actionneur pneumatique 52 qui, par l'intermédiaire de deux tiges 53 et 54, entablées entre elles en 55, font pivoter de 90° l'arbre 56 sur lequel sont emboîtées, par l'intermédiaire de deux mors 57, les deux roulettes folles 42.

Les deux pinces fixes et mobiles et le groupe de formation du noeud sont respectivement supportés par des arbres 58, 59 et 60 qui peuvent translater verticalement pour porter le groupe de tendage et le groupe de formation du noeud dans le même temps au-dessous du plan de coulissement du second et du troisième tapis pendant toute la formation du noeud, ou au-dessus dudit plan durant l'insertion de la crosse dans le noeud formé avant la rotation des roulettes dans la position de décrochage du noeud.

Pour effectuer le tendage de la corde une fois que la crosse a été insérée dans le noeud et donc pour effectuer la fermeture du noeud, sont prévues deux barres 61 et 62 qui sont amenées à se trouver entre le groupe de formation et les pinces.

Les barres sont montées sur des colonnes 63 qui, avant l'abaissement desdits groupes, sont faites translater vers le bas de manière à ce qu'elles s'appuient sur la corde pour la tirer vers le bas.

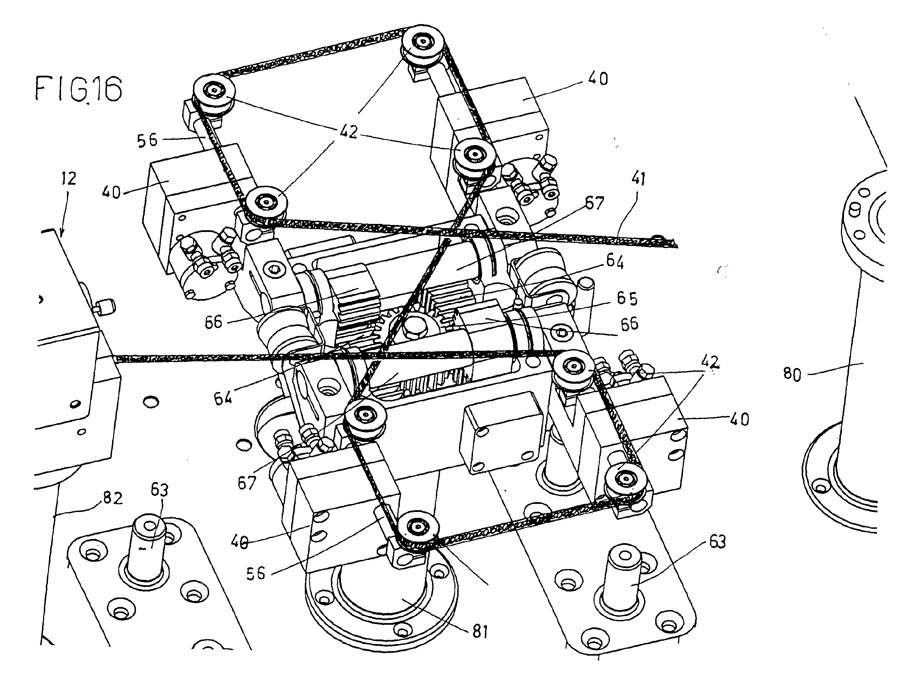

En référence à la figure 16, l'on décrira maintenant le mécanisme qui provoque le basculement dans le même temps des quatre tablettes 40 portant chacune deux roulettes folles 42 pour les porter de la position illustrée dans les figures 11 et 16 à la position illustrée dans la figure 12.

Par 65 est indiqué un pignon qui s'engrène sur deux crémaillères 64 parallèles, lesdites crémaillères présentant une double file de dents entre elles perpendiculaires de manière à ce que la file de dents verticale s'engrène sur ledit pignon 65, alors que la file de dents horizontale de chaque crémaillère s'engrène sur deux secteurs dentés 66, chacun desquels emboîté sur un arbre 67, avec un axe 51, sur lequel est également emboîtée la tablette 40.

Le pignon 65 est motorisé par un actionneur situé au-dessous et non illustré.

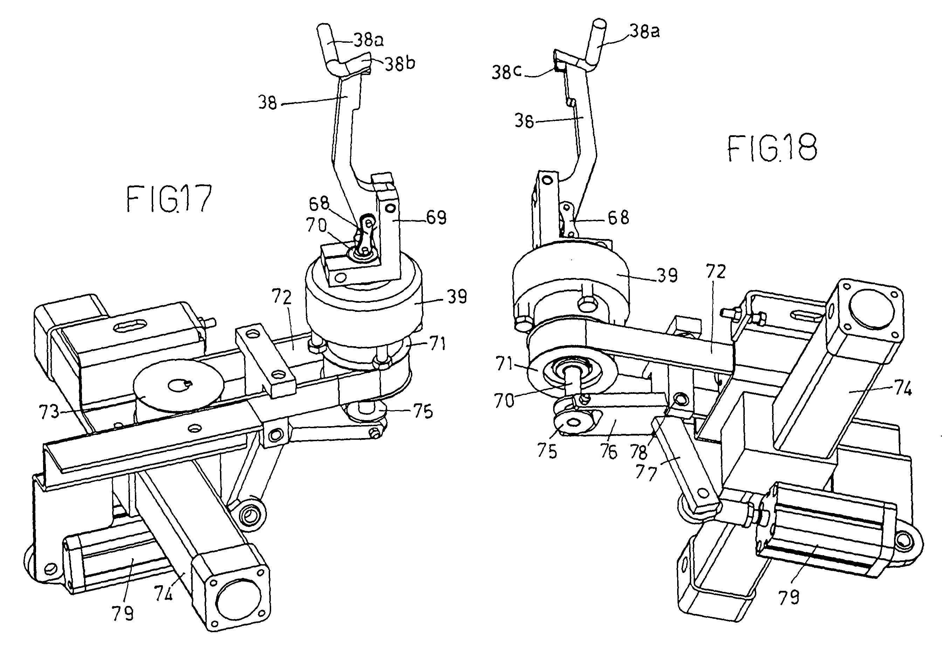

En référence aux figures 17 et 18, l'on décrira maintenant le mécanisme de mise en mouvement des deux bras manipulateurs 38, chacun desquels étant supporté par la tourelle 39.

Le manipulateur 38 est encharné sur le bras vertical d'une équerre 69 fixée à la tourelle 39 à l'intérieur de laquelle peut coulisser un arbre rainuré 70 qui porte sur son sommet, encharnées, deux bielles 68 encharnées sur l'autre extrémité sur le manipulateur.

Sur l'arbre rainuré 70 est également insérée une poulie 71 reliée par une courroie 72 à une autre poulie 73 actionnée par un actionneur linéaire 74 qui se déplace selon un mouvement de translation rectiligne alternatif.

Sur l'arbre rainuré 70 est également emboîtée une poulie rainurée 75 dans laquelle s'engage une fourche 76 portée par un levier 77 entablé en 78.

Au bras moteur du levier 77 est encharnée la tige d'un piston 79 dont le mouvement provoque la rotation du levier 77 et le déplacement en vertical de l'arbre rainuré qui intervient sur le basculement du manipulateur par l'intermédiaire de la bielle 68.

Pour conclure, l'actionneur linéaire 74 provoque la rotation alternée du manipulateur, alors que le piston 79 provoque le basculement de 90° du manipulateur pour le porter de la position de repos illustrée par les figures 17 et 18 à la position opérative illustrée dans la figure 11.

Par 80, 81 et 82 sont indiqués enfin trois arbres qui supportent respectivement la pince fixe, le groupe de formation du noeud, et la pince mobile; lesdits arbres peuvent translater verticalement dans le meme temps pour se déplacer d'une position abaissée de formation du noeud sous le plan de coulissement du jambon à une position dans laquelle la crosse du jambon se trouve substantiellement dans l'axe avec les deux anses du noeud de type en demi-clef. Les mécanismes de translation des arbres sont disposés sous le plan 2 et ne sont pas illustrés puisque de type traditionnel.

L'on décrira maintenant le fonctionnement de la machine.

La machine étant privée de corde, au début du travail, l'on effectue l'insertion du bout de la corde entre la roue dentée 16 et la courroie folle 17 qui a été éloignée de la roue dentée de part l'intervention du piston 21.

L'on fait avancer manuellement la corde dans le canal 22 jusqu'à la lame et l'on donne la commande de coupe de la corde pour en ébarber le bout. La pince mobile 12 se porte en contact avec la pince fixe 11 avec le canal 33 coïncidant avec le canal 22.

L'on effectue le rapprochement de ladite courroie à la roue dentée motorisée dans le sens contraire à l'avancement de la corde pour maintenir une certaine tension.

L'intervention de la roue d'alimentation 14 motorisée par l'actionneur 30 fait avancer la corde jusqu'à faire sortir un morceau du canal 22 et l'introduire dans le canal 33 de la pince mobile.

Ladite opération est facilitée du fait que la roue d'alimentation est maintenue pressée contre la corde par le piston 31.

L'intervention du vérin 37 provoque l'accrochage de l'excentrique denté 35 et le blocage de la corde située au-dessous.

Au moyen de l'intervention du piston 12a, l'on provoque le retour de la pince mobile 12 en position de départ et donc le tendage de la corde 41 entre les deux pinces perpendiculairement à la direction du mouvement du jambon.

Pendant cette phase, pour maintenir tendue la corde, l'on commande le vérin pneumatique pour rapprocher la courroie à la roue dentée motorisée et l'on active le relatif moteur qui pivote en sens contraire à celui d'enroulement de la corde.

L'on trouve ensuite l'intervention en séquence des bras manipulateurs 38 qui se portent d'une position de repos verticale à une position de début de cycle horizontale pour porter la corde à entourer en séquence les huit roulettes de formation du noeud, tout en se maintenant sur un plan horizontal.

Le basculement de 90° des deux couples de quatre roulettes provoque la formation du noeud qui est successivement translaté en vertical pour le porter en position d'enfilage de la crosse.

La translation verticale du noeud se produit en actionnant les trois arbres qui soutiennent la pince mobile, la pince fixe et le groupe de formation du noeud.

L'insertion de la crosse dans le noeud formé étant effectuée, les roulettes pivoteront encore de 90° pour se porter dans une position avec l'axe de rotation perpendiculaire au sens d'avancée du tapis, et elles pourront ainsi relâcher le noeud formé qui tombera sur la crosse du jambon.

L'abaissement des barres 61 provoquera le tendage et le serrage du noeud.

Avant l'abaissement des barres 61, l'on obtiendra le blocage de la corde dans la pince fixe.

Se produira alors l'ouverture de la pince mobile et l'intervention du piston de coupe 27 pour la coupe de la corde.

Le second tapis convoyeur pourra s'activer pour porter le jambon sur le troisième tapis convoyeur de déchargement.

Tout le groupe de formation du noeud et les pinces retournent en bas sous les tapis convoyeurs et les roulettes 42 pivotent autour de leur axe de support et basculent, de part la rotation des respectives tablettes 40, en retournant dans un plan horizontal avec axe de rotation vertical pour commencer le cycle de formation d'un autre noeud.

La machine prévoit substantiellement de former le noeud sans la présence du jambon et d'effectuer l'insertion de la crosse dans le noeud préformé dans une phase successive, ceci permettant d'effectuer la procédure de nouage en automatique sans l'intervention d'un opérateur.

## Revendications

1. Machine pour nouer une corde à la crosse d'un jambon, **caractérisée en ce qu'**elle comprend:
- un convoyeur (7) sur lequel est envoyé avec une cadence prédéterminée un jambon avec la crosse orientée vers l'avant dans le sens de translation du convoyeur;
- un convoyeur (9) disposé de manière distancée successivement au convoyeur (7);
- un groupe de tendage (10) de la corde (41) disposé entre le convoyeur (7) et le convoyeur (9) constitué d'une pince fixe (11) et d'une pince mobile (12) qui peut translater perpendiculairement au sens de translation des convoyeurs pour prélever la corde de la pince fixe et la tirer tendue transversalement aux convoyeurs dans l'espace par lequel ils sont distancés;
- un groupe de formation du noeud (13) disposé entre les deux pinces pour former sur un plan les deux anneaux qui forment un noeud en demi-clef et les porter successivement en plan vertical perpendiculaire au sens d'avancée des convoyeurs;
- des barres (61) et (62) pour le tendage de la corde avec la crosse insérée dans le noeud, disposées entre le groupe de formation du noeud et les pinces;
- des arbres verticaux (80), (81) et (82) de support respectivement de la pince fixe, du groupe de formation du noeud et de la pince mobile, aptes à translater verticalement et dans le même temps pour se porter d'une position abaissée, dans laquelle ladite pince fixe, pince mobile et groupe de formation du noeud se trouvent sous le plan de passage du jambon pendant la formation du noeud, à une position soulevée lorsque le noeud est formé pour l'introduction de la crosse dans le noeud de type en demi-clef.

2. Machine selon la revendication 1, **caractérisée en ce que** le convoyeur (7) comprend des parois d'arrêt (6) supportées par des bras (6a) qui peuvent pivoter pour ouvrir lesdites parois d'arrêt pour laisser passer le jambon.

3. Machine selon la revendication 1, **caractérisée en ce qu'**elle comprend une pince fixe (11) qui comprend: un canal (22) dans lequel passe la corde, le long duquel est prévu un excentrique denté (23) apte à interférer avec la corde pour son pincement; une roulette (14) motorisée et pressée contre la corde pour l'alimentation de cette dernière; une lame à guillotine (26) qui traverse perpendiculairement le canal (22) pour effectuer la coupe de la corde; une roue dentée (16) motorisée et pivotant en sens inverse au sens d'avancée de la corde; une courroie folle (17) pressant contre la roue dentée (16) et oscillant autour de son axe de rotation, la roue dentée (16) et la courroie folle (17) constituant des moyens de tendage de la corde durant le déroulement de la bobine pour la formation du noeud.

4. Machine selon la revendication 3, **caractérisée en ce que** la pince fixe comprend un piston pneumatique (21) pour pousser la courroie folle (17) de l'interférence avec la roue dentée (16) durant la phase d'introduction de la corde dans le canal (22) avant de commencer le cycle de fonctionnement de la machine.

5. Machine selon la revendication 1, comprenant une pince mobile (12) qui prévoit un canal (33) le long duquel peut interférer un excentrique denté (35).

6. Machine selon la revendication 1, **caractérisée en ce que** le groupe de formation du noeud (13) comprend deux bras manipulateurs (38) oscillant autour d'un axe vertical et basculants d'une position verticale non opérative à une position horizontale apte à saisir la corde tendue entre la pince fixe et la pince mobile; sous lesdits bras manipulateurs, lorsqu'ils se trouvent en position horizontale, sont prévues quatre tablettes (40), chacune desquelles portant deux roulettes rainurées et folles (42), les tablettes (40) étant supportées par des arbres perpendiculaires au sens de translation des convoyeurs et oscillantes d'une position horizontale à une position verticale pour porter lesdites roulettes (42) d'une position dans laquelle est se trouvent dans un plan horizontal avec leur axe de rotation vertical à une position verticale dans laquelle elles se trouvent deux à deux de face avec l'axe de rotation horizontal parallèle au sens de translation des convoyeurs, les roulettes étant supportées deux à deux par des arbres (56) insérés dans les tablettes (40) et oscillant de 90° pour se porter dans une position avec les axes de rotation perpendiculaires au sens de translation des tapis convoyeurs.

7. Machine selon les revendications 1 et 6, **caractérisée en ce que** chaque bras (38) manipulateur porte sur son extrémité deux tiges (38a) et (38b) entre elles substantiellement perpendiculaires et formant substantiellement un crochet apte à saisir la corde et l'entraîner pour l'enrouler sur les roulettes (42) et la laisser successivement glisser des deux tiges; une dent (38c) est prévue dans l'angle d'union entre la tige (38a) et la tige (38b), apte à engager la corde dans une première phase de l'entrainement.
